# EUROPEAN PATENT SPECIFICATION

(11) **EP 0 434 261 B1**
(45) Date of publication and mention of the grant of the patent: **08.11.1995**
(21) Application number: 90313227.2
(22) Date of filing: 06.12.1990
(51) Int. Cl.: G11B 21/02, G11B 21/04

(54) **Apparatus for supporting a conductor sleeve in a head gimbal assembly**
Haltevorrichtung eines Isolierschlauchs für ein Leiter in einem Kopf mit kardanischer Aufhängung
Dispositif pour maintenir une gaine de conducteur dans un assemblage avec suspension de tête à cardan

(30) Priority: 22.12.1989 US 456099
(43) Date of publication of application: 26.06.1991
(73) Proprietor: SEAGATE TECHNOLOGY INTERNATIONAL, Georgetown, Grand Cayman Island (KY)
(72) Inventor: Hagen, Tracy M., Minnetonka, Minnesota 55343 (US)
(74) Representative: Sturt, Clifford Mark

(56) References cited:
- EP-A- 0 232 916
- FR-A- 2 477 310
- FR-A- 2 526 570
- JP-U- 159 909
- US-A- 4 755 892

## Description

This invention relates to apparatus for supporting a conductor sleeve in a head-gimbal assembly.

A head-gimbal assembly used in a hard disk file consists essentially of three components. The first component is a slider which features a self-acting hydrodynamic air bearing and an electromagnetic transducer used for recording and retrieving information on and from a spinning magnetic disk. The second component is a gimbal which is attached to the slider. The gimbal is resilient in the pitch and roll directions of the slider to allow the slider to follow the topography of the disk over which it is flying. Also, the gimbal is rigid in the in-plane directions for maintaining precise in-plane slider positioning. The third component is a load beam which is attached to the gimbal and to a support arm. The load beam is connected to the support arm by a well known technique referred to as swaging or ball staking. The load beam is resilient in the vertical direction. This resilience allows the slider to follow the topography of the disk. As with the gimbal, the load beam is rigid in the in-plane directions. The load beam also acts as a spring supplying a downward force that counteracts the hydrodynamic lifting force developed by the air bearing.

Electrical signals are sent to and received from the electromagnetic transducer via very small conductors. The conductors are typically twisted copper wires. There are usually two conductors, but the number of conductors may vary.

The wires are routed generally along a longitudinal axis of the load beam from the transducer to the support arm. The wires are placed inside a flexible sleeve or tube to protect them from being damaged. The conductor sleeve or tube is secured to the load beam by bendable metal tabs. A typical head gimbal assembly has one metal tab at the end of the load beam nearest the slider, another around the longitudinal mid-point of the load beam and two more at the end of the load beam nearest the support arm.

The two metal tabs which secure the conductor sleeve to the load beam at the end nearest the support arm are generally formed integrally with the load beam and are formed in a U-shape by the load beam manufacturer. The U-shape of the capture tabs facilitates placement of the conductor sleeve into the tabs during assembly of the head gimbal assembly. As one step in the assembly, the U-shape capture tabs are bent closed around the conductor sleeve to prevent the conductor sleeve from escaping during subsequent handling of the head gimbal assembly.

However, prior to the ball staking operation, a mounting plate is welded to the load beam. Then, during the ball staking operation, clamps are applied to certain portions of the load beam and the mounting plate. To facilitate proper execution of the ball-staking technique, the capture tabs must maintain certain clearances from the surfaces of the load beam and the mounting plate. The critical clearances are related to the thickness and size of the capture tabs with respect to the load beam and the mounting plate. If these clearances are not maintained, the capture tabs interfere with the clamps used in the ball-staking operation causing alignment errors.

Mere closure of the capture tabs around the conductor sleeve does not compress the tabs enough to provide the necessary clearances. Therefore, an additional operation must be performed. After the capture tabs are closed, they must be compressed until they provide the necessary clearances.

The compression, however, alters the substantially round cross-sectional shape of the closed capture tabs into an oblong shape. This often results in the formation of undesirable metal burrs on the capture tabs which must be removed by hand. In addition, the compression operation significantly distorts the conductor sleeve and frequently damages it. In some cases, the conductors inside the conductor sleeve are crushed and damaged as well.

EP-A-0 232 916 relates to a disc drive assembly in which an electrical connection is made to the transducer means by a flat, flexible circuit.

Japanese Utility Model publication no. 1-59909 discloses apparatus for supporting a conductor sleeve in a head gimbal assembly, including a load beam having three offset capture members extending therefrom for capturing the sleeve.

The present invention provides a sleeve capture apparatus suitable for use with a load beam in a head-gimbal assembly, in which capture tabs are not required to undergo compression to comply with necessary clearances. The sleeve capture apparatus supports a conductor sleeve running from a gimbal to a support arm along the load beam.

According to the invention, there is provided apparatus suitable for supporting a conductor sleeve in a head gimbal assembly, the apparatus comprising a load beam having a capture means extending therefrom for capturing said sleeve, the capture means comprising a first capture member extending from an edge of the load beam and having a sleeve contact surface for supporting the conductor sleeve in a first direction; a second capture member extending from the edge of the load beam and having a sleeve contact surface for supporting the conductor sleeve in a second direction, generally opposite to the first direction; and a third capture member extending from the edge of the load beam and having a sleeve contact surface for supporting the conductor sleeve in the first direction; the conductor sleeve being supported by the apparatus primarily along a support axis, the support axis being generally transverse to the first and second directions; characterised in that the sleeve contact surface of at least one of the capture members has a bent contour for wrapping around a portion of the conductor sleeve.

Other aspects of the invention are defined in the appended claims.

A sleeve capture apparatus may be provided which is suitable for use with a load beam, the load beam being used for coupling a gimbal to a support arm in a head-gimbal assembly and the sleeve capture apparatus being for supporting a conductor sleeve running from the gimbal to the support arm along the load beam, the sleeve capture apparatus comprising a first capture member extending from an edge of the load beam and having a sleeve contact surface for contacting the conductor sleeve, a second capture member extending from the edge of the load beam and having a sleeve contact surface for contacting the conductor sleeve, and a third capture member extending from the edge of the load beam and having a sleeve contact surface for contacting the conductor sleeve, where the second capture member has its sleeve contact surface displaced from a line defined generally by the sleeve contact surfaces of the first and third capture members by a distance less than the thickness of the conductor sleeve.

A load beam may be provided which is suitable for coupling a gimbal to a support arm, and a head-gimbal assembly and for supporting a conductor sleeve running from the gimbal to the support arm along the load beam, the beam comprising a resilient section with a first end for attachment to the support arm, and a second end, a substantially rigid section having a first end coupled to the second end of the resilient section and a second end for attachment to the gimbal, a first capture member extending from an edge of the first end of the load beam and having a sleeve contact surface for contacting the conductor sleeve, a second capture member extending from the edge of the load beam and having a sleeve contact surface for contacting the conductor sleeve and a third capture member extending from the edge of the load beam and having a sleeve contact surface for contacting the conductor sleeve, where the second capture member has its sleeve contact surface displaced from a line defined generally by the sleeve contact surfaces of the first nd third capture members by a distance less than the thickness of the conductor sleeve.

A head-gimbal assembly may be provided which is suitable for being connected to a support arm for moving the head gimbal assembly about an axis of rotation in a magnetic recording system where information is recorded on and retrieved from a magnetic disk, comprising a transducer for recording and retrieving the information, a slider, coupled to the transducer, for providing a lifting force to allow the transducer to fly over the disk, a gimbal, coupled to the slider, for providing a resilient connection to the slider, a load beam having a first end coupled to the support arm and having a second end coupled to the gimbal, conductor means, coupled to the transducer and the load beam, for carrying electric signals to and from the transducer, a first capture member extending from an edge of the first end of the load beam and having a contact surface for supporting the conductor means, a second capture member extending from the edge of the load beam and having a contact surface for supporting the conductor means, and a third capture member extending from the edge of the load beam and having a contact surface for supporting the conductor means, where the second capture member has its contact surface displaced from a line defined generally by the contact surfaces of the first and third capture members by a distance less than the thickness of the conductor means.

In any case there may be a plurality of additional capture members extending from the edge of the load beam, each having a contact surface for contacting the conductor means in alternate directions.

How the invention can be carried into effect is hereinafter particularly described with reference to the accompanying drawings, in which:-
Figure 1 is a top plan view of a magnetic disk in a hard disk file with an associated support arm and head-gimbal assembly;
Figure 2A is a bottom plan view of the head-gimbal assembly shown in Figure 1;
Figure 2B is a side view of the head-gimbal assembly shown in Figure 2A;
Figure 2C is a top plan view of the head-gimbal assembly shown in Figure 2A;
Figure 2D is a side view showing conductor connections to a slider of the head-gimbal assembly shown in Figure 2A;
Figure 3 is the opposite side view of head-gimbal assembly shown in Figure 2B;
Figure 4A shows a crimped capture tab of the prior art which is unacceptable;
Figure 4B shows a crimped capture tab of the prior art which is unacceptable;
Figure 4C shows a crimped capture tab of the prior art;
Figure 4D shows a crimped capture tab of the prior art which is unacceptable;
Figure 5A is a bottom plan view of a load beam according to the present invention;
Figure 5B is a side view of the load beam shown in Figure 5A;
Figure 6 is a bottom plan view, to an enlarged scale, of the load beam of Figure 5A with a conductor sleeve mounted thereon;
Figure 7 is a diagrammatic sectional view on the line 7-7 in Figure 6, to an enlarged scale; and
Figure 8 is a side view of the load beam shown in Figure 6.

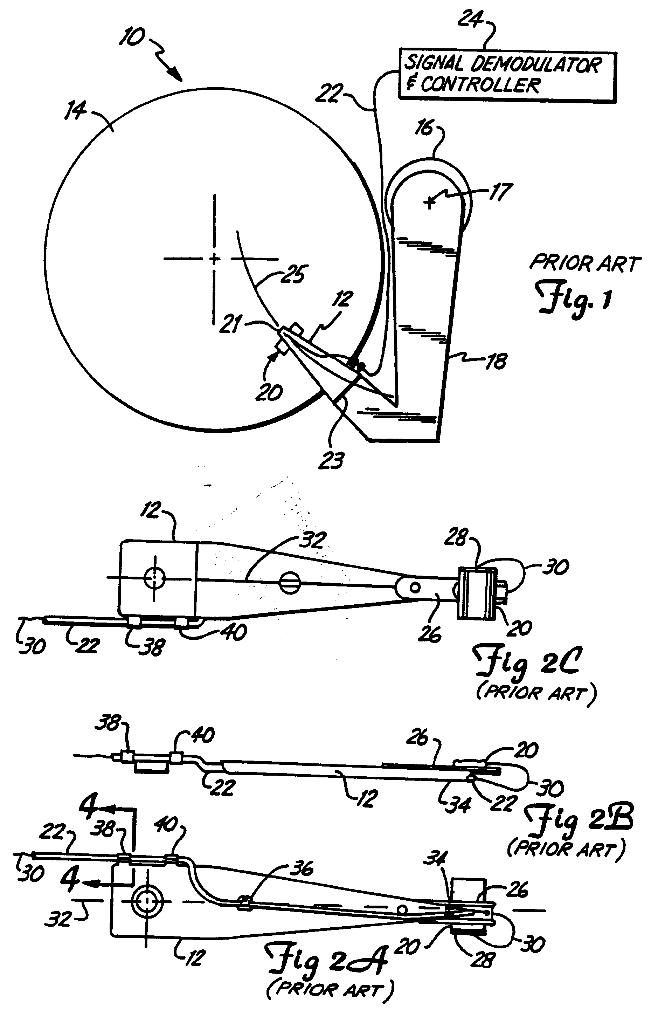

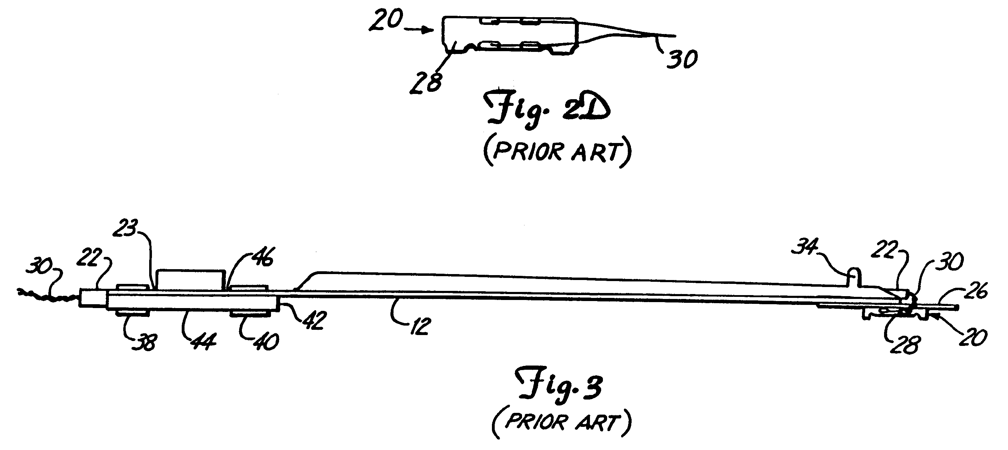

A system 10 (Figure 1) includes a load beam 12, a disk 14, a rotary actuator 16, a support arm 18, a slider 20, a conductor sleeve 22 and a signal demodulator and controller 24. Slider 20 carries an electromagnetic transducer 28 (Figure 2A) which flies over the surface of disk 14 as disk 14 rotates. Slider 20 is coupled to an end 21 of load beam 12 by a gimbal 26 (Figure 3). Load beam 12 is, in turn, coupled at its other end 23 to support arm 18 by swaging or ball staking. As rotary actuator 16 pivots support arm 18 about axis 17, slider 20 moves over disk 14 along an arc 25 to permit reading from or writing in different tracks on disk 14.

Signals are written in and retrieved from disk 14 using electromagnetic transducer 28. Electrical signals are provided to and received from electromagnetic transducer 28 from signal demodulator and controller 24 via conductors 30 (Figure 2A) within conductor sleeve 22.

In the head-gimbal assembly (Figures 2A, 2B and 2C), load beam 12 is coupled, for example, by laser welding, to gimbal 26 which, in turn, is coupled, for example, glued, to slider 20. Conductors 30 are threaded through conductor sleeve 22, which protects conductors 30 and helps prevent them from being damaged. Conductor sleeve 22 is generally made from extruded polytetrafluoroethylene, sometimes referred to as Teflon or PTFE.

Load beam 12 has four capture tabs 34, 36, 38 and 40 for securing conductor sleeve 22 to load beam 12 in order to support it as it runs generally along longitudinal axis 32 of load beam 12 between transducer 28 and support arm 18. The capture tabs include first and second metal tabs 34 and 36 which are thin, flat, bendable metal. During production of the head-gimbal assembly, an assembler places conductor sleeve 22 adjacent metal tabs 34 and 36 and bends metal tabs 34 and 36 over conductor sleeve 22 to secure it in place.

The capture tabs also include formed tabs 38 and 40 which are of substantially semi-cylindrical shape. The assembler places conductor sleeve 22 within the semi-cylindrical capture tabs 38 and 40 and bends tabs 38 and 40 closed or nearly closed around conductor sleeve 22. Capture tabs 38 and 40 must be closed sufficiently to prevent conductor sleeve 22 from sliding or moving longitudinally within tabs 38 and 40. Also, capture tabs 38 and 40 must be closed sufficiently to hold conductor sleeve 22 within the tabs so that conductor sleeve 22 does not come loose during subsequent assembly and handling of the head gimbal assembly.

The conductors 30 (Figure 2D) are ultrasonically bonded to connector pads 29 on the electromagnetic transducer 28.

Because ball-staking is used to attach load beam 12 to support arm 18 (Figure 1), a mounting plate 42 (Figure 3) is coupled by laser welding to end 23 of load beam 12 to facilitate the ball-staking process. During the ball-staking process, clamps interface with surface 44 of mounting plate 42 and surface 46 of load beam 12. Therefore, for the ball-staking technique to work effectively, the plane of surface 44 and the plane of surface 46 must be free from interference by capture tabs 38 and 40. Otherwise, improper and misaligned connection may result between load beam 12 and support arm 18.

As Figure 3 shows, the capture tabs 38 and 40 protrude above the plane of surface 46 and below the plane of surface 44. Therefore, during assembly, after capture tabs 38 and 40 are closed around conductor sleeve 22, the assembler compresses capture tabs 38 and 40 into an oblong cross-sectional shape to a proper thickness to provide proper clearance between themselves and the planes of surfaces 44 and 46.

In order to be properly compressed, so that it does not inferfere with the ball-staking technique, capture tabs must be compressed between the planes of surfaces 44 and 46 with some additional clearance to accommodate production tolerances.

Figure 4A shows capture tab 38 which is not acceptably compressed. Capture tab 38 (Figure 4A) has been closed sufficiently to hold conductors 30 and conductor sleeve 22, but has not been sufficiently compressed. It protrudes above the plane of surface 46 of load beam 12 and will, therefore, interfere with the ball-staking technique.

Figure 4B shows another unacceptable capture tab 38 which has been closed and compressed, but extends below the plane of surface 44 of mounting plate 42. Such a capture tab 38 will interfere with the ball-staking technique.

Figure 4C shows several drawbacks of the prior art capture tabs. Capture tab 38 (Figure 4C) has been compressed sufficiently to remain within the planes of surfaces 44 and 46, but has protruded into sleeve 22. This can damage sleeve 22 and if capture tab 38 protrudes far enough into sleeve 22, it can damage or break conductors 30.

Figure 4C also shows another problem which occurs as a result of compression. Upon being compressed, the surface of the bendable material forming capture tab 38 may fracture or deform under the pressure of the compression tool. This results in undesirable metal burrs, such as burr 48, forming on the surface of capture tab 38. An additional step must be added to the assembly process to remove burr 48 by hand.

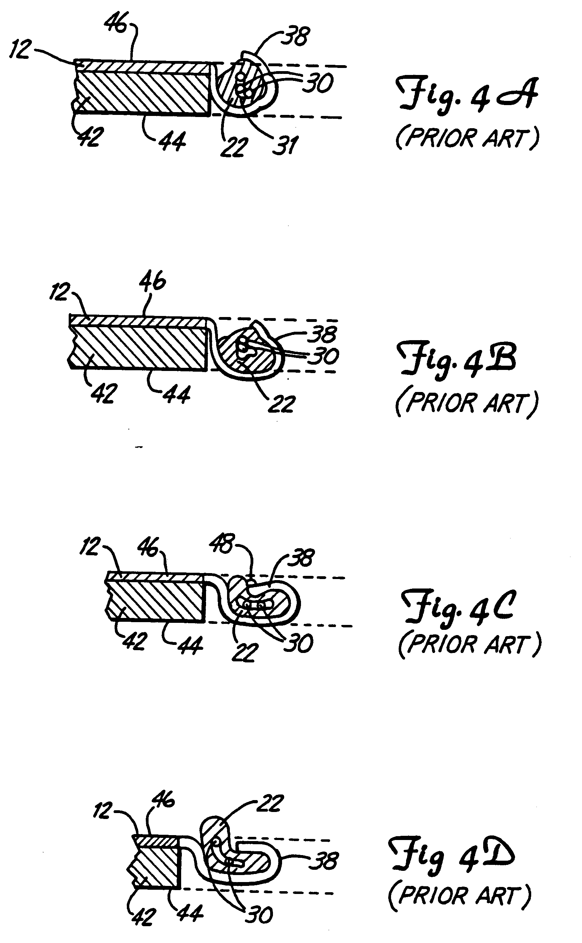

Figure 4D illustrates another problem resulting from the compression technique used in the prior art. Capture tab 38 (Figure 4D) has been over-compressed causing conductor sleeve 22 to bulge out from within capture tab 38. This not only causes conductor sleeve 22 to break the plane of surface 46 and interfere with the ball-staking operation, but it also damages conductor sleeve 22. If compressed far enough, capture tab 38 would damage or break conductors 30 within conductor sleeve 22.

All the problems shown in Figures 4A to 4D result in unacceptable head-gimbal assemblies. In order to remedy the problems, additional steps must be taken during assembly to reposition capture tab 38 or remove metal burr 48 from capture tab 38. Also, if conductor sleeve 22 is crushed too far and conductors 30 are damaged, the head gimbal assembly must be scrapped.

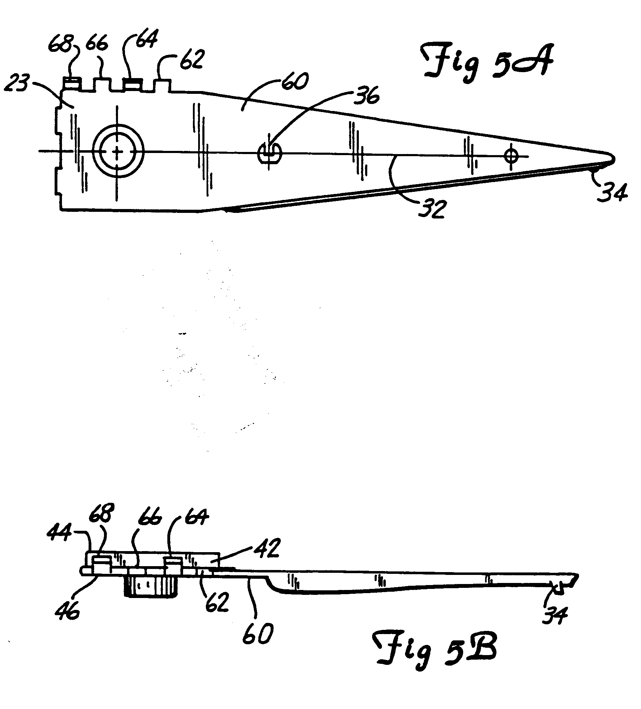

A load beam 60 (Figures 5A and 5B) according to the present invention, includes some elements similar to those on prior art load beam 12, which elements are given corresponding reference numerals. Thus, load beam 60 has bendable metal capture tabs 34 and 36 which function in the same way as those on load beam 12.

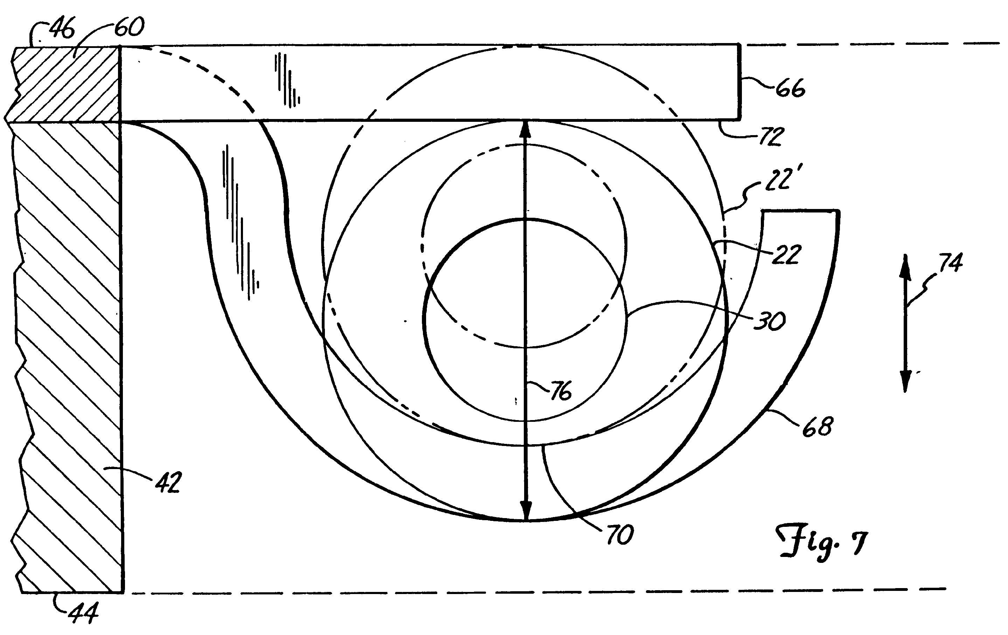

Instead of capture tabs 38 and 40, however, load beam 60 has four capture members 62, 64, 66 and 68 at end 23. Capture members 62 and 66 (Figure 5B) are flat tabs which extend out from one edge of load beam 60 and remain substantially in the same plane as load beam 60. Capture members 64 and 68 also extend from the edge of load beam 60, but are formed in the shape of hooks (Figure 7) for supporting conductor sleeve 22. Capture members 64 and 68 extend both away from the edge of load beam 60 and out of the plane of load beam 60. However, capture members 62, 64, 66 and 68 do not break the plane of either surface 44 or surface 46 (Figure 7).

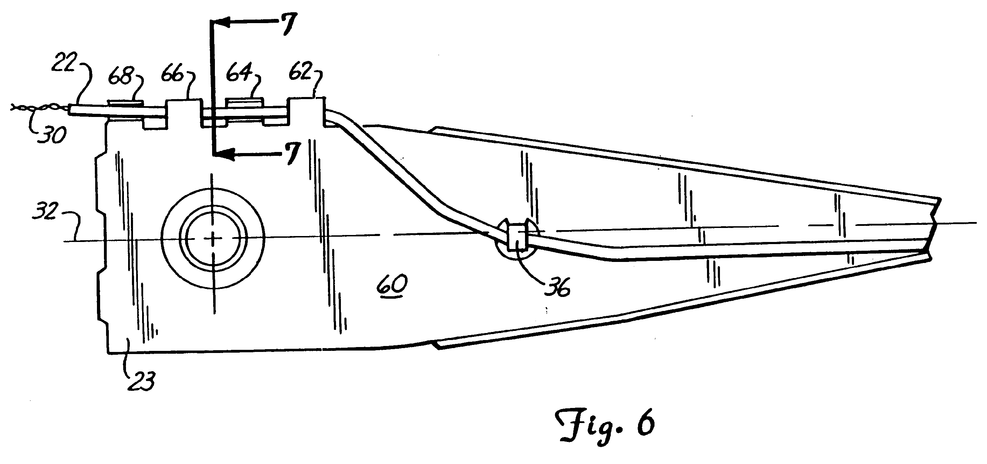

As with load beam 12, the assembler places conductor sleeve 22 adjacent metal tabs 34 and 36. Then, the assembler bends metal tabs 34 and 36 (Figure 6) over conductor sleeve 22 to secure conductor sleeve 22 to load beam 60. However, instead of threading conductor sleeve 22 through capture tabs 38 and 40, closing those tabs and compressing them, as in the prior art, the assembler merely threads conductor sleeve 22 under and over capture tabs 62, 64, 66 and 68 through the space therebetween. Thus, the conductor sleeve 22 (Figure 6) is positioned under capture tab 62, then over capture tab 64 in the hook portion thereof, then under capture tab 66 and finally over capture tab 68 in the hook portion thereof.

Capture tab 68 (Figure 7) is similar to capture tab 64 and has a curved or bent contact surface 70 for contacting and supporting conductor sleeve 22. Capture tab 66 is similar to capture tab 62 and has a substantially flat contact surface 72 for contacting and supporting conductor sleeve 22. Contact surface 70 of capture tab 68 is displaced from contact surface 72 of capture tab 66 in the vertical direction as shown by arrow 74. The maximum distance of displacement between contact surfaces 70 and 72 is less than the diameter 76 of conductor sleeve 22 and conductors 30. This results in the vertical position of conductor sleeve 22 varying with the longitudinal position of conductor sleeve 22 along the edge of load beam 60. For example, the vertical position of conductor sleeve 22, at the point where it contacts surface 72, shown in full lines, is closer to the plane of surface 44 than the vertical position of sleeve 22 at the point where it contacts surface 70, shown as 22′ in broken lines.

Thus, the vertical position of sleeve 22 varies as it is threaded under tab 66, contacting surface 72, and as it is threaded over tab 68, contacting surface 70.

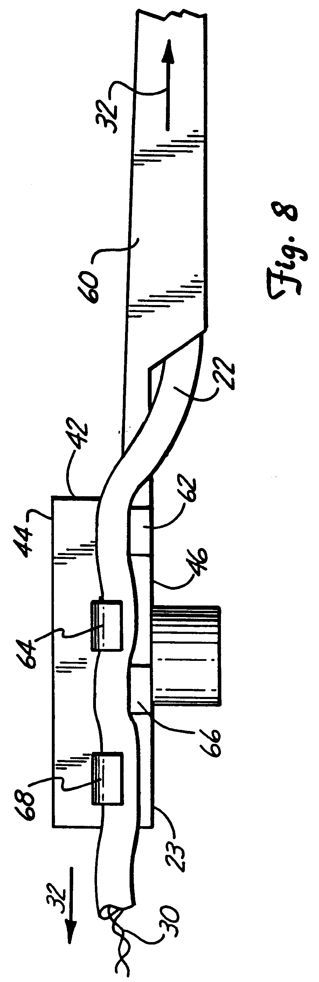

The hook portions of tabs 64 and 68 (Figure 8) hold conductor sleeve 22 in close proximity with the edge of load beam 60. As conductor sleeve 22 is threaded beneath tab 62, over tab 64, beneath tab 66 and over tab 68, it is snake or wave shaped. The wave shape operates as a cleat to prevent conductor sleeve 22 from sliding longitudinally within tabs 62, 64, 66 and 68, in either direction along the edge of load beam 60.

In one preferred embodiment, the material comprising load beam 60 has a thickness of 0.0762 mm (0.003 inches) and mounting plate 42 has a nominal thickness of 0.508 mm (0.02 inches). Conductor sleeve 22 has an nominal outer diameter of 0.4318 mm (0.017 inches). Capture tabs 62, 64, 66 and 68 are formed integrally with load beam 60 and thus have a thickness of 0.0762 mm (0.003 inches). Ideally, a nominal clearance of 0.0508mm (0.002 inches) to accommodate production tolerances, should exist between the top of conductor sleeve 22 and the plane of surface 46 as well as between the bottom of conductor sleeve 22 and tabs 64 and 68 and the plane of surface 44. However, it is found in practice that so long as the contacting surface 70 engages the conductor sleeve 22′ at 0.4318 mm (0.017 inches) from the plane of the surface 46, there is no need to compress the conductor sleeve after assembly. Accordingly tabs 64 and 68 are formed into shapes approximating semi-circles and extend downwardly to approximately 0.0762 (0.003 inches) from the plane of surface 44 of mounting plate 42. The capture tabs 64 and 68 are manufactured to terminate approximately 0.1016 mm (0.004 inches) from the plane of surface 46. This allows sleeve 22 to snake or wave adequately, yet provide adequate clearance from the planes of surfaces 44 and 46. The tabs 64 and 68 wrap around a substantial portion of the surface of the conductor sleeve 22 so as to restrict its movement towards and away from the edge of the load beam 60 (Figure 6) and towards the surface 44 (Figure 8). The flat tabs 62 and 66 restrict the movement of the conductor sleeve 22 towards the surface 46 (Figure 8).

In plan view (Figure 6) the tabs 64 and 68 extend outwardly from the edge of the load beam 60 to an extent sufficient to allow for an initial bend (Figure 7) away from the surface 46 and an approximately semi-circular bend in the other direction towards and away from the surface 44. This may be slightly less than twice the outer diameter of the conductor sleeve. The tabs 62 and 66 then extend from the edge of the load beam 60 by a slightly less amount, sufficient to hold the conductor sleeve in the tabs 64 and 68.

Each of the tabs 62 and 66 has a length approximately twice that of the outer diameter of conductor sleeve 22. The capture tabs 64 and 68 have a length substantially the same as tabs 62 and 66. The spacing between capture tabs 62, 64, 66 and 68 is approximately 1.5 times the outer diameter of sleeve 22. In the preferred embodiment, the capture tab closest to the gimbal end of load beam 60 is an unformed capture tab 62 (Figure 8). The formed and unformed capture tabs alternate along the edge of load beam 60.

Sleeve 22 is formed of a material such as Teflon PTFE which is flexible to facilitate weaving it through capture tabs 62, 64, 66 and 68, yet stiff enough to retain its position within the four capture tabs. After weaving the conductor sleeve through the tabs, it is straightened as seen in Figure 6 and, so far as possible, as seen in Figure 8. Thus, conductor sleeve 22 cannot escape from the capture tabs unless deliberately removed. The waviness acts to cleat the sleeve within the capture tabs to prevent the sleeve from moving longitudinally within the capture tabs.

It will be seen that the first and third capture tabs have flat sleeve contact surfaces to contact the conductor sleeve on one side and that the second and fourth capture tabs have semi-cylindrical sleeve contact surfaces to contact the conductor sleeve on the other side.

It should be noted that the inventive capture tab design could be implemented using other embodiments. For example, three or five capture tabs could be used instead of the preferred four. Also, the formed and unformed capture tabs could be interchanged and the direction of the hook portion of the formed capture tabs could be reversed.

The present invention provides an apparatus for routing conductor sleeve 22 and conductors 30 along the edge of load beam 60. The present invention provides formed and unformed capture tabs 62, 64, 66 and 68. An assembler is capable of threading conductor sleeve 22 through the capture tabs without the use of any tooling aids. Also, conductor sleeve 22 remains in place within the capture tabs without the assembler performing the additional step of bending the capture tabs closed. Further, the capture tabs are formed to provide adequate clearance for the swaging or ball-staking technique without requiring the assembler to perform the step of compressing the capture tabs into an oblong shape.

By eliminating the step of compressing the capture tabs, several advantages are achieved. Firstly, the time required to assemble the head gimbal assembly is reduced. Secondly, incidence of damage to conductor sleeve 22 and conductors 30 is reduced, thereby increasing yield. Thirdly, the additional step of manually removing metal burrs from the capture tabs (which burrs are created by the compression step) is eliminated.

Eliminating the production steps and reject head gimbal assemblies associated with closure and compression of the capture tabs of the prior art, decreases cost and increases yield.

Although the present invention has been described with reference to preferred embodiments, workers skilled in the art will recognize that changes may be made in form and detail without departing from the scope of the invention as claimed.

## Claims

1. Apparatus suitable for supporting a conductor sleeve (22) in a head gimbal assembly, the apparatus comprising a load beam (60) having capture means extending therefrom for capturing said sleeve, the capture means comprising a first capture member (62;64) extending from an edge of the load beam (60) and having a sleeve contact surface (72,70) for supporting the conductor sleeve (22) in a first direction; a second capture member (64;66) extending from the edge of the load beam (60) and having a sleeve contact surface (70;72) for supporting the conductor sleeve (22) in a second direction, generally opposite to the first direction; and a third capture member (66;68) extending from the edge of the load beam (60) and having a sleeve contact surface (72;70) for supporting the conductor sleeve (22) in the first direction; the conductor sleeve (22) being supported by the apparatus primarily along a support axis, the support axis being generally transverse to the first and second directions; characterised in that the sleeve contact surface (70) of at least one of the capture members has a bent contour for wrapping around a portion of the conductor sleeve (22).

2. Apparatus as claimed in claim 1, characterised in that the sleeve contact surface (70;72) of the second capture member (64;66) is separated from the sleeve contact surfaces (72) of the first and third capture members (62,66; 64,68) by a displacement distance less than the thickness of the conductor sleeve (22).

3. Apparatus as claimed in claim 1 or 2 characterised in that the bent contour is generally semi-circular.

4. Apparatus as claimed in any preceding claim, characterised in that the second capture member (64;66) is located between the first and third capture members (62,66; 64,68) along the support axis.

5. Apparatus as claimed in any preceding claim, characterised in that the sleeve contact surface (70) of the second capture member (64) has the bent contour.

6. Apparatus as claimed in any preceding claim, characterised in that the sleeve contact surfaces (70) of the first and third capture members (64,68) each have said bent contour.

7. Apparatus as claimed in any preceding claim characterised by a fourth capture member (68;62) extending from the edge of the load beam (60) and having a sleeve contact surface (70,72) for supporting the conductor sleeve in the second direction.

8. Apparatus as claimed in claim 7, characterised in that the fourth capture member (68;62) is similar to the second or third capture member (64;66).

9. Apparatus as claimed in any preceding claim, characterised in that the capture members (62,64,66,68) are formed integrally with the load beam (60).

10. Apparatus as claimed in any preceding claim, characterised in that the sleeve contact surfaces (72:70) are positioned such that they cause the conductor sleeve (22) supported thereby to become wave-shaped so as to inhibit movement of the conductor sleeve in the general direction of the support axis.

## Patentansprüche

1. Vorrichtung, die zur Halterung einer Leiterhülse (22) in einer Kopf-Kardan-Baugruppe geeignet ist, wobei die Vorrichtung einen Lastträger (60) mit sich von diesem aus erstreckenden Klemmeinrichtungen zum Festklemmen der Hülse aufweist und die Klemmeinrichtungen ein erstes Klemmelement (62;64), das sich von einer Kante des Lastträgers (60) aus erstreckt und eine Hülsen-Kontaktfläche (72,70) zur Halterung der Leiterhülse (22) in einer ersten Richtung aufweist, ein zweites Klemmelement (64;66), das sich von der Kante des Lastträgers (60) aus erstreckt und eine Hülsen-Kontaktfläche (70;72) zur Halterung der Leiterhülse (22) in einer zweiten Richtung allgemein entgegengesetzt zur ersten Richtung aufweist, und ein drittes Klemmelement (66;68) umfassen, das sich von der Kante des Lastträgers (60) aus erstreckt und eine Hülsen-Kontaktfläche (72;70) zur Halterung der Leiterhülse (22) in der ersten Richtung aufweist, wobei die Leiterhülse (22) durch die Vorrichtung hauptsächlich entlang einer Halterungsachse gehaltert ist und die Halterungsachse allgemein quer zu den ersten und zweiten Richtungen verläuft, dadurch gekennzeichnet, daß die Hülsen-Kontaktfläche (70) von zumindest einem der Klemmelemente einen gebogenen Umriß aufweist, um sich um einen Teil der Leiterhülse (22) herumzulegen.

2. Vorrichtung nach Anspruch 1, dadurch gekennzeichnet, daß die Hülsen-Kontaktfläche (70;72) der zweiten Klemmelemente (64;66) von den Hülsen-Kontaktflächen (72) der ersten und dritten Klemmelemente (62,66;64,68) durch einen Versetzungsabstand getrennt ist, die kleiner als die Dicke der Leiterhülse (22) ist.

3. Vorrichtung nach Anspruch 1 oder 2, dadurch gekennzeichnet, daß der gebogene Umriß allgemein halbkreisförmig ist.

4. Vorrichtung nach einem der vorhergehenden Ansprüche, dadurch gekennzeichnet, daß das zweite Klemmelement (64;66) zwischen den ersten und dritten Klemmelementen (62,66;64,68) entlang der Halterungsachse liegt.

5. Vorrichtung nach einem der vorhergehenden Ansprüche, dadurch gekennzeichnet, daß die Hülsen-Kontaktfläche (70) des zweiten Klemmelementes (64) den gebogenen Umriß hat.

6. Vorrichtung nach einem der vorhergehenden Ansprüche, dadurch gekennzeichnet, daß die Hülsen-Kontaktflächen (70) der ersten und dritten Klemmteile (64,68) jeweils den gebogenen Umriß aufweisen.

7. Vorrichtung nach einem der vorhergehenden Ansprüche, gekennzeichnet durch ein viertes Klemmelement (68;62), das sich von der Kante des Lastträgers (60) aus erstreckt und eine Hülsen-Kontaktfläche (70,72) zur Halterung der Leiterhülse in der zweiten Richtung aufweist.

8. Vorrichtung nach Anspruch 7, dadurch gekennzeichnet, daß das vierte Klemmelement (68;62) ähnlich dem zweiten oder dritten Klemmelement (64;66) ist.

9. Vorrichtung nach einem der vorhergehenden Ansprüche, dadurch gekennzeichnet, daß die Klemmelemente (62,64,66,68) einstückig mit dem Lastträger (60) ausgebildet sind.

10. Vorrichtung nach einem der vorhergehenden Ansprüche, dadurch gekennzeichnet, daß die Hülsen-Kontaktflächen (72;70) so angeordnet sind, daß sie bewirken, daß die durch sie gehalterte Leiterhülse (22) wellenförmig wird, so daß eine Bewegung der Leiterhülse in der allgemeinen Richtun der Halterungsachse verhindert wird.

## Revendications

1. Dispositif conçu pour soutenir une gaine de conducteur (22) dans un assemblage de tête à cardan, le dispositif comprenant un barreau de charge (60) présentant un moyen d'ancrage qui fait saillie de celui-ci pour assurer l'ancrage de ladite gaine, le moyen d'ancrage comportant un premier élément d'ancrage (62 ; 64) qui fait saillie d'un bord du barreau de charge (60) et présentant une surface de contact de gaine (72 ; 70) destinée à soutenir la gaine de conducteur (22) dans un premier sens ; un deuxième élément d'ancrage (64 ; 66) qui fait saillie du bord du barreau de charge (60) et présentant une surface de contact de gaine (70 ; 72) destinée à soutenir la gaine de conducteur (22) dans un deuxième sens généralement opposé au premier sens et un troisième élément d'ancrage (66 ; 68) qui fait saillie du bord du barreau de charge (60) et présentant une surface de contact de gaine (72 ; 70) destinée à soutenir la gaine de conducteur (22) dans le premier sens ; la gaine de conducteur (22) étant soutenue par le dispositif principalement le long d'un axe de soutien, l'axe de soutien s'étendant généralement en sens transversal par rapport aux premier et deuxième sens ; caractérisé en ce que la surface de contact de gaine (70) d'au moins un des éléments d'ancrage présente un profil incurvé pour serrer une partie de la gaine de conducteur (22).

2. Dispositif selon la revendication 1, caractérisé en ce que la surface de contact de gaine (70 ; 72) du deuxième élément d'ancrage (64 ; 66) est séparée des surfaces de contact de gaine (72) des premier et troisième éléments d'ancrage (62, 66 ; 64, 68) par une distance de déplacement inférieure à l'épaisseur de la gaine de conducteur (22).

3. Dispositif selon la revendication 1 ou 2, caractérisé en ce que le profil incurvé est généralement semi-circulaire.

4. Dispositif selon l'une quelconque des revendications précédentes, caractérisé en ce que le deuxième élément d'ancrage (64 ; 66) est situé entre les premier et troisième éléments d'ancrage (62, 66 ; 64, 68) le long de l'axe de soutien.

5. Dispositif selon l'une quelconque des revendications précédentes, caractérisé en ce que la surface de contact de gaine (70) du deuxième élément d'ancrage (64) présente le profil incurvé.

6. Dispositif selon l'une quelconque des revendications précédentes, caractérisé en ce que les surfaces de contact de gaine (70) des premier et troisième membres d'ancrage (64, 68) présentent chacune ledit profil incurvé.

7. Dispositif selon l'une quelconque des revendications précédentes, caractérisé par un quatrième élément d'ancrage (68 ; 62) faisant saillie du bord du barreau de charge (60) et présentant une surface de contact de gaine (70 ; 72) destinée à soutenir la gaine de conducteur dans le deuxième sens.

8. Dispositif selon la revendication 7, caractérisé en ce que le quatrième élément d'ancrage (68 ; 62) est similaire au deuxième ou troisième élément d'ancrage (64 ; 66).

9. Dispositif selon l'une quelconque des revendications précédentes, caractérisé en ce que les éléments d'ancrage (62, 64, 66, 68) sont formés en une pièce avec le barreau de charge (60).

10. Dispositif selon l'une quelconque des revendications précédentes, caractérisé en ce que les surfaces de contact de gaine (72 ; 70) sont positionnées de façon à ce que la gaine de conducteur (22) soutenue par celles-ci devienne ondulée, empêchant ainsi tout mouvement de la gaine de conducteur dans le sens général de l'axe de soutien.
